(19) Europäisches Patentamt
European Patent Office
Office européen des brevets

(11) **EP 2 122 196 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(21) Anmeldenummer: **08708177.4**

(22) Anmeldetag: **25.01.2008**

(51) Int Cl.:
*F16H 3/12* *(2006.01)*       *F16H 61/04* *(2006.01)*
*F16H 3/72* *(2006.01)*       *F16H 37/04* *(2006.01)*
*F16H 3/091* *(2006.01)*

(86) Internationale Anmeldenummer:
**PCT/EP2008/050838**

(87) Internationale Veröffentlichungsnummer:
**WO 2008/095790 (14.08.2008 Gazette 2008/33)**

(54) **GETRIEBEVORRICHTUNG UND VERFAHREN ZUM BETREIBEN EINER GETRIEBEVORRICHTUNG**

TRANSMISSION DEVICE AND METHOD FOR OPERATING A TRANSMISSION DEVICE

ENSEMBLE BOÎTE DE VITESSES ET PROCÉDÉ PERMETTANT DE FAIRE FONCTIONNER LEDIT ENSEMBLE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **03.02.2007 DE 102007005525**

(43) Veröffentlichungstag der Anmeldung:
**25.11.2009 Patentblatt 2009/48**

(73) Patentinhaber: **ZF Friedrichshafen AG 88038 Friedrichshafen (DE)**

(72) Erfinder: **BORNTRÄGER, Kai 88085 Langenargen (DE)**

(56) Entgegenhaltungen:
**EP-A- 1 127 731        WO-A-2006/107202
DE-A1- 19 859 458      DE-A1- 19 931 770
DE-A1- 19 934 696      DE-C1- 19 853 825
GB-A- 2 346 124**

**Beschreibung**

Die Erfindung betrifft eine Getriebevorrichtung sowie ein Verfahren zum Betreiben einer Getriebevorrichtung gemäß der im Oberbegriff des Patentanspruches 1 beziehungsweise des Patentanspruches 8 näher definierten Art.

Aus der DE 10 2006 024 370.6 ist ein Mehrgruppengetriebe und ein Verfahren zum Betreiben eines Mehrgruppengetriebes bekannt. Das Mehrgruppengetriebe beziehungsweise das automatisierte Mehrgruppen-Schaltgetriebe, welches beispielsweise in Nutzfahrzeugen eingesetzt wird, weist wenigstens zwei hintereinander angeordnete mehrgängige Getriebegruppen auf, über die eine Vielzahl von Gängen schaltbar sind. Einer ersten Getriebegruppe ist eine Getriebeeingangswelle zugeordnet, die über ein Anfahrelement mit einem Antriebsmotor eines Fahrzeuges verbindbar ist, während einer zweiten Getriebegruppe eine Getriebehauptwelle zugeordnet ist. Zusätzlich sind Lastschaltmittel zur Herstellung einer zeitweiligen direkten Verbindung zwischen der Getriebeeingangswelle und der Getriebehauptwelle vorgesehen, über die während eines Gangwechsels von einem Istgang in einen Zielgang ein Zwischengang schaltbar ist.

Die vorbeschriebene Bauweise des Mehrgruppengetriebes ermöglicht es, eine Getriebeeingangswelle und eine Getriebehauptwelle über ein Lastschaltmittel direkt zu verbinden, um die Drehzahl einer Antriebsmaschine eines Antriebsstranges eines Fahrzeuges über das Anfahrelement, wie eine Anfahrkupplung, zu reduzieren und dabei das dynamische Moment des Antriebsmotors zu nutzen, um einen Zwischengang zu schalten, während die Schaltklauen und Synchronisierungen der beiden Getriebegruppen beim Gangwechsel in ihre Neutralstellung geschaltet sind. Damit wird ein Antriebsmoment der Antriebsmaschine auf den Zwischengang umgeleitet. Die zweite Getriebegruppe wird lastlos geschaltet und lässt sich nach dem Anpassen der Antriebsdrehzahl über das schlupfend betriebene Lastschaltmittel des Zwischenganges umschalten.

Nachteilhafterweise besteht jedoch in Abhängigkeit des jeweils angeforderten Gangwechsels und der Anzahl der Zwischengänge während der Schaltvorgänge keine vollständige Zugkraftunterstützung, da der Zwischengang nicht die gleiche Übersetzung aufweist wie der angeforderte Zielgang. Prinzipbedingt weist der Zwischengang ein kleineres Übersetzungsverhältnis auf als der angeforderte Zielgang, da eine Sekundärseite des als Kupplung ausgeführten Lastschaltmittels zur Zwischengangschaltung langsamer drehen muss als die Primärseite beziehungsweise die antriebsmaschinenseitige Kupplungshälfte, da sich ansonsten der Leistungsfluss im Antriebsstrang umkehrt.

Aus der DE 198 53 825 C1 ist eine Schaltüberbrückungsreibungskupplung bekannt, welche koaxial zwischen der Eingangswelle und der Ausgangswelle eines automatisierbaren Kraftfahrzeugantriebsstrangs angeordnet ist.

Der vorliegenden Erfindung liegt daher die Aufgabe zugrunde, eine Getriebevorrichtung zum Betreiben einer Getriebevorrichtung zur Verfügung zu stellen, mittels welchen zugkraftunterbrechungsfreie Schaltungen durchführbar sind.

Erfindungsgemäß wird diese Aufgabe mit einer Getriebevorrichtung zum Betreiben einer Getriebevorrichtung gemäß den Merkmalen des Patentanspruches 1 gelöst.

Die erfindungsgemäße Getriebevorrichtung ist mit wenigstens zwei hintereinander angeordneten mehrgängigen Getriebegruppen ausgeführt. Ein Drehmoment einer Getriebeeingangswelle ist über diese in eine der Getriebegruppen einleitbar und der anderen Getriebegruppe über eine Getriebehauptwelle zuführbar. Während eines Übersetzungswechsels von einem Istgang in einen Zielgang ist die Getriebeeingangswelle zur Darstellung eines Zwischenganges wenigstens zeitweise direkt mit der Getriebehauptwelle über ein Lastschaltelement verbindbar. Erfindungsgemäß ist eine elektrische Maschine vorgesehen, mittels welcher zumindest bei geschaltetem Zwischengang ein Drehmoment in die über das Lastschaltelement miteinander verbundenen Wellen einleitbar ist. Die elektrische Maschine ist dabei mit einer Welle eines Planetenradsatzes verbunden und die Getriebeeingangswelle ist mit einer weiteren Welle des Planetenradsatzes wirkverbunden.

Damit besteht auf einfache Art und Weise bei Vorliegen einer Anforderung für einen Gangwechsel in der Getriebevorrichtung die Möglichkeit, ein Absinken der Zugkraft beziehungsweise einen Zugkrafteinbruch auf das Niveau der Übersetzung des Zwischenganges durch Einleiten eines von der elektrischen Maschine erzeugten Drehmomentes zusätzlich zum Antriebsmoment einer Antriebsmaschine eines Antriebsstranges eines Fahrzeuges zu vermeiden.

Bei einem Verfahren zum Betreiben der erfindungsgemäßen Getriebevorrichtung während eines Schaltvorganges von einem Istgang in einen Zielgang ist es vorgesehen, dass die Übertragungsfähigkeit des Lastschaltelementes während eines Schaltvorganges erhöht wird, bis die Getriebeeingangswelle und die Getriebehauptwelle verbunden sind und die erste Getriebegruppe lastfrei ist. Anschließend wird wenigstens ein zur Darstellung des Istganges vorgesehenes Schaltelement geöffnet. Ein von der elektrischen Maschine erzeugtes und zu einem an der Getriebeeingangswelle anliegenden Drehmoment gleichgerichtetes Drehmoment wird in die über das Lastschaltelement miteinander verbundenen Wellen, d. h. die Getriebeeingangswelle und die Getriebehauptwelle, eingeleitet und die Übertragungsfähigkeit des Lastschaltelementes erhöht, um die Drehzahl der Getriebeeingangswelle auf das Niveau der Drehzahl des Zielganges zu führen, wobei ein zur Darstellung des Zielganges vorgesehenes Schaltelement geschlossen, das Lastschaltelement geöffnet und das Drehmoment der elektrischen Maschine wenigstens annähernd auf Null reduziert wird, wenn die Drehzahl der Getriebeeingangswelle der Drehzahl des Zielganges wenigstens annähernd entspricht.

Mit dem Verfahren wird bei Vorliegen einer Anforderung zum Gangwechsel in einer Getriebevorrichtung ein an der Getriebeeingangswelle anliegendes Drehmoment bei geschlossenem Lastschaltelement direkt auf die Getriebehauptwelle geleitet und die erste Getriebegruppe lastfrei geschaltet. Dadurch sinkt die Zugkraftunterstützung auf den Wert der Momentübersetzung des geschalteten Zwischenganges ab. Um den Zugkrafteinbruch zumindest teilweise zu kompensieren, wird zusätzlich zu dem an der Getriebeeingangswelle anliegenden Antriebsmoment von der elektrischen Maschine ein Drehmoment mit gleicher Richtung aufgebracht, in die miteinander verbundenen Wellen eingeleitet und damit der Zugkrafteinbruch kompensiert. Das vorzugsweise schlupfend betriebene Lastschaltelement überträgt das Antriebsmoment der Getriebeeingangswelle und das Drehmoment der elektrischen Maschine auf die Getriebehauptwelle. Um einen Angleich der Drehzahl der Getriebeeingangswelle auf die Drehzahl des Zielganges durchzuführen, wird die Übertragungsfähigkeit des Lastschaltelementes erhöht. Dadurch wird die Drehzahl der Getriebeeingangswelle reduziert, bis sie der Drehzahl des Zielganges entspricht. Bei letztgenanntem Betriebszustand der Getriebevorrichtung ist der Zielgang einlegbar und das Lastschaltelement kann geöffnet werden, während das Drehmoment der elektrischen Maschine wieder auf Null reduzierbar ist, wobei der Schaltvorgang hiermit abgeschlossen ist.

Sowohl mit der erfindungsgemäßen Getriebevorrichtung als auch mit dem Verfahren zum Betreiben einer solchen Getriebevorrichtung ist ein Zugkrafteinbruch eines automatisierten Getriebes mit Zwischengangschaltung kompensierbar, wobei eine Getriebevorrichtung mit Zwischengangschaltung mit einem elektrodynamischen Anfahrelement (EDA), einem integrierten Stator-Generator (ISG) oder einem Kurbelwellen-Stator-Generator (KSG) kombinierbar ist.

Das bedeutet, dass mit einer Getriebevorrichtung nach der Erfindung neben der Darstellung von zugkraftunterbrechungsfreien Schaltungen auch die mit einem EDA, ISG oder einem KSG möglichen Hybridfunktionen, wie einem Rekuperations- oder Boostbetrieb ohne Unterbrechung während der Schaltungen in der Getriebevorrichtung nutzbar sind.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden.

Es zeigt:

Fig. 1  eine stark schematisierte Darstellung eines Fahrzeuges, welches mit einer Getriebevorrichtung nach der Erfindung ausgebildet ist;

Fig. 2  ein Räderschema einer ersten Ausführungsform der Getriebevor- richtung nach der Erfindung;

Fig. 3  ein Räderschema einer zweiten Ausführungsform der Getriebe- vorrichtung nach der Erfindung;

Fig. 4  ein Räderschema einer dritten Ausführungsform der Getriebevor- richtung nach der Erfindung mit grafisch dargestelltem Drehmo- mentfluss bei eingelegtem Istgang;

Fig. 5  ein Räderschema der Getriebevorrichtung gemäß Fig. 4 mit gra- fisch dargestelltem Drehmomentfluss während eines Gangwech- sels vom Istgang in Richtung eines Zielganges während eines Ausrückens des Istganges und Einlegen eines Zwischenganges;

Fig. 6  das Räderschema der Getriebevorrichtung gemäß Fig. 4 mit gra- fisch dargestelltem Drehmomentfluss bei eingelegtem Zwischen- gang;

Fig. 7  das Räderschema der Getriebevorrichtung gemäß Fig. 4 mit gra- fisch dargestelltem Drehmomentfluss bei eingelegtem Zielgang und

Fig. 8  Drehzahl- und Drehmomentverläufe im Antriebsstrang des in Fig. 1 dargestellten Fahrzeuges über der Zeit, welche sich wäh- rend eines Schaltvorganges in der Getriebevorrichtung nach der Erfindung bei Anwendung des erfindungsgemäßen Verfahrens einstellen.

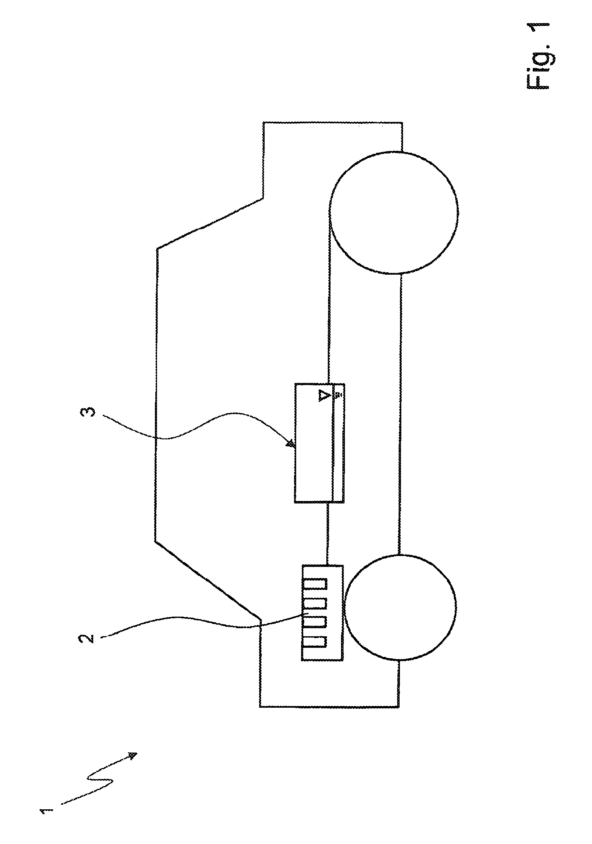

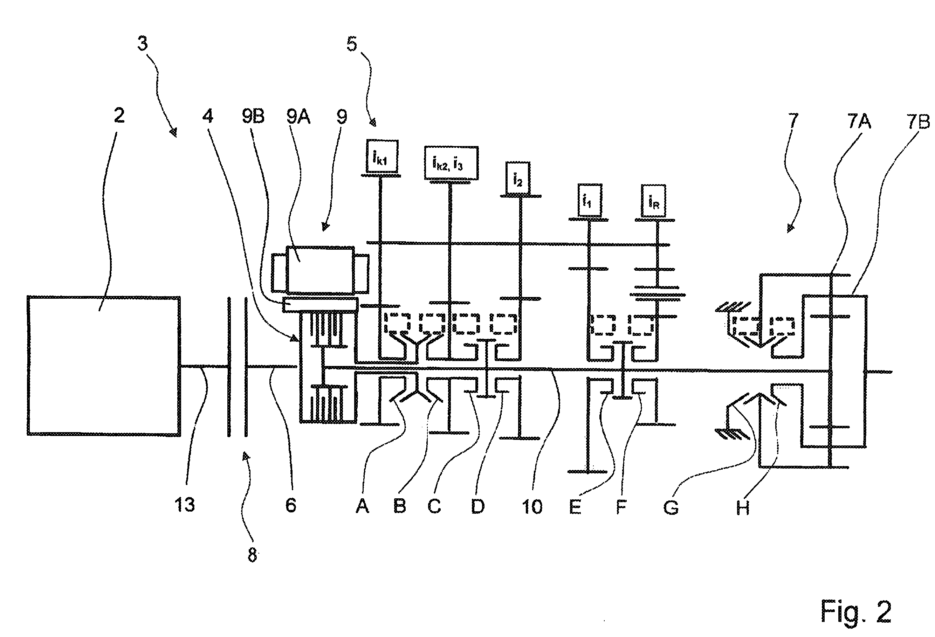

In Fig. 1 ist eine stark schematisierte Darstellung eines Fahrzeuges 1 gezeigt, welches in an sich bekannter Art und Weise mit einer Brennkraftmaschine 2 und einer Getriebevorrichtung 3 ausgeführt ist. Dabei sind in Fig. 2 bis Fig. 4 verschiedene Ausführungen der Getriebevorrichtung 3 in Form von Räderschemata dargestellt, welche in der nachfolgenden Beschreibung näher erläutert werden.

Grundsätzlich sind mit den dargestellten Ausführungsformen der Getriebevorrichtung 3 mehrere Vorwärtsfahrstufen sowie eine Rückwärtsfahrstufe darstellbar, wobei die verschiedenen Übersetzungen in Abhängigkeit einer Betätigung verschiedener Schaltelemente A bis H und einem Lastschaltelement 4 darstellbar sind. Dabei ist das Lastschaltelement 4 als reibschlüssige Lamellenkupplung ausgeführt und die Schaltelemente A, B, G und H sind als an sich bekannte Synchronisierungen ausgebildet. Die Schaltelemente C, D, E und F sind als formschlüssige Schaltelemente, vorzugsweise als Klauenschaltelemente, ausgestaltet.

Die Getriebevorrichtung 3 umfasst eine erste Getriebegruppe 5 und eine in Bezug auf eine Getriebeeingangswelle 6 nachgeschaltete zweite Getriebegruppe 7. Die erste Getriebegruppe 5 ist als ein Vorgelegewellenschaltgetriebe ausgebildet und die zweite Getriebegruppe 7 ist als ein Planetenradsatz ausgeführt, wobei ein Hohlrad 7A der zweiten Getriebegruppe 7 über das Schaltelement G gehäuseseitig festlegbar ist und ein Planetenträger 7B über das Schaltelement H mit dem Hohlrad 7A drehfest verbindbar ist.

Zwischen der Getriebevorrichtung 3 und der Brennkraftmaschine 2 ist vorliegend ein als reibschlüssige Lamellenkupplung ausgeführtes Anfahrelement 8 angeordnet, um das Fahrzeug 1 gemäß Fig. 1 in an sich bekannter Art und Weise über die Brennkraftmaschine 2 anfahren zu können. Zusätzlich ist getriebeeingangsseitig eine elektrische Maschine 9 vorgesehen, wobei ein Stator 9A drehfest ausgebildet ist und ein Rotor 9B der elektrischen Maschine 9 vorliegend drehfest mit der Getriebeeingangswelle 6 und einer Kupplungshälfte des Lastschaltelementes 4 verbunden ist. Die weitere Kupplungshälfte des Lastschaltelementes 4 ist drehfest mit einer Getriebehauptwelle 10 verbunden, womit die Getriebeeingangswelle 6 in der nachbeschriebenen Art und Weise bei geschlossenem Lastschaltelement 4 direkt mit der Getriebehauptwelle 10 verbunden werden kann.

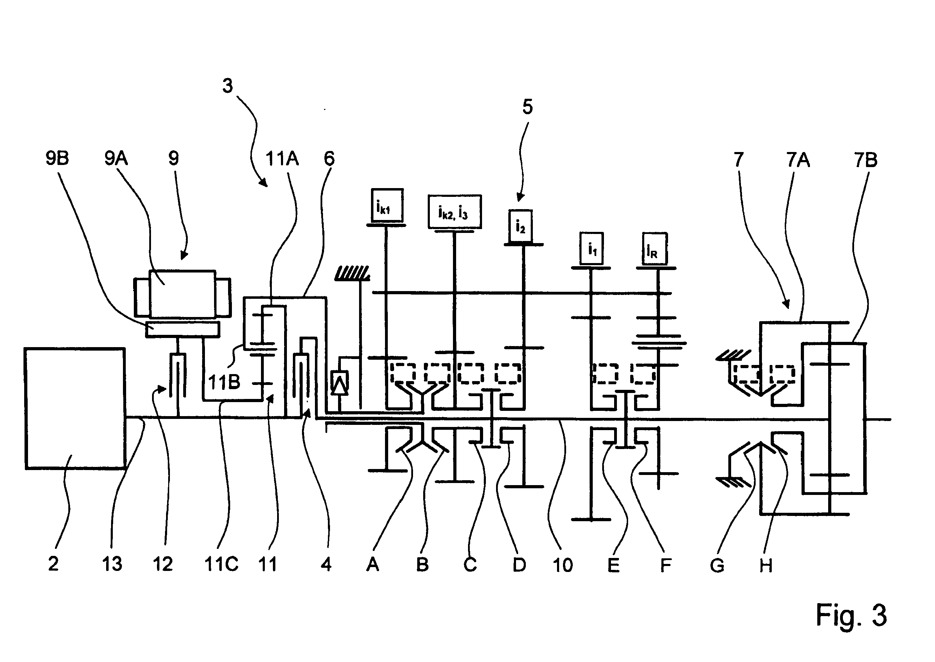

Ein Räderschema eines zweiten Ausführungsbeispieles der Getriebevorrichtung 3 nach der Erfindung ist in Fig. 3 dargestellt, wobei sich die Getriebevorrichtung 3 gemäß Fig. 3 von der in Fig. 2 dargestellten ersten Ausführungsform lediglich im Bereich zwischen der Brennkraftmaschine 2 und dem Lastschaltelement 4 unterscheidet, weshalb in der nachfolgenden Beschreibung lediglich auf die Unterschiede näher eingegangen wird.

Die elektrische Maschine 9 der Getriebevorrichtung 3 gemäß Fig. 3 ist vorliegend als EDA ausgeführt und über einen getriebeeingangsseitigen Planetenradsatz 11 mit der Getriebeeingangswelle 6 wirkverbunden. Während eines Anfahrvorganges des Fahrzeuges 1 gemäß Fig. 1 ist ein weiteres Schaltelement 12 geöffnet, so dass ein Antriebsmoment der Brennkraftmaschine 2 über eine mit einem Hohlrad 11 A des Planetenradsatzes 11 fest verbundene Motorausgangswelle 13 in den Planetenradsatz 11 eingeleitet wird.

Der Rotor 9B der elektrischen Maschine 9 ist mit einem Sonnenrad 11C des Planetenradsatzes 11 verbunden, so dass am Abtrieb des Fahrzeuges 1 erst bei elektromaschinenseitiger Abstützung ein Abtriebsmoment darstellbar ist. Nach Beendigung des Anfahrvorganges wird das Schaltelement 12 geschlossen und der Planetenradsatz 11 verblockt, womit die Motorausgangswelle 13 direkt mit der Getriebeeingangswelle 6 verbunden ist. Um die Getriebeeingangswelle 6 direkt mit der Getriebehauptwelle 10 zu verbinden, ist das Lastschaltelement 4 in der zu Fig. 2 beschriebenen Art und Weise neben dem weiteren Schaltelement 12 zu schließen.

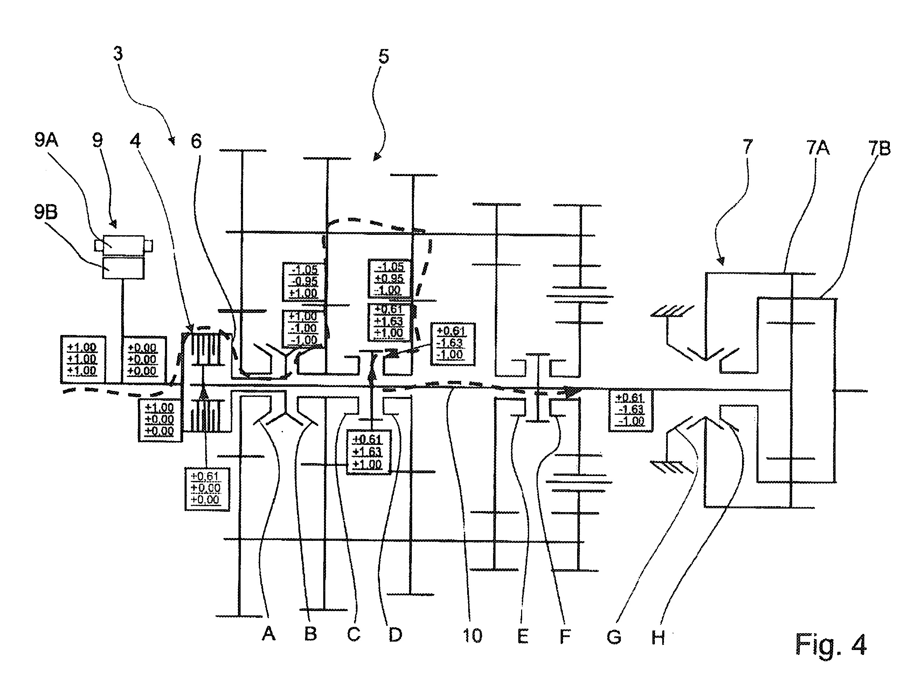

Fig. 4 zeigt ein drittes Ausführungsbeispiel der Getriebevorrichtung 3 nach der Erfindung, welches sich grundsätzlich von dem in Fig. 2 dargestellten ersten Ausführungsbeispiel lediglich im Bereich der ersten Getriebegruppe 5, welche bei dem in Fig. 4 dargestellten Ausführungsbeispiel als Zwei-Vorgelegewellen-Getriebe ausgeführt ist, unterscheidet, weshalb bezüglich der grundsätzlichen Funktionalität der Getriebevorrichtung 3 auf die Beschreibung zu Fig. 2 verwiesen wird.

Die den Zahnradpaarungen der in Fig. 4 bis Fig. 7 dargestellten Räderschemata zugeordneten Vierecke enthalten Zahlen, wobei die jeweils oberste Zahl einer Drehzahl, die mittlere Zahl einen Drehmoment und die untere Zahl einer Leistung entspricht. Die Werte sind jeweils auf die Drehzahl Eins, das Moment Eins und die Leistung Eins am Getriebeeingang bezogen.

Nachfolgend wird anhand von Fig. 4 bis Fig. 7 das erfindungsgemäße Verfahren zum Betreiben der Getriebevorrichtung 3 näher erläutert, wobei durch Anwendung des erfindungsgemäßen Verfahrens grundsätzlich nahezu zugkraftunterbrechungsfreie Schaltvorgänge durchführbar sind.

In Fig. 4 ist der Kraftfluss von der Getriebeeingangswelle 6 über das Lastschaltelement 4 und durch die erste Getriebegruppe 5 in Richtung der zweiten Getriebegruppe 7 durch die strichliert ausgeführte Linie bei geschalteter zehnter Vorwärtsfahrstufe graphisch wiedergegeben, wobei zur Darstellung der zehnten Vorwärtsfahrstufe das Lastschaltelement 4 geöffnet ist und die Schaltelemente B und D in der ersten Getriebegruppe 5 geschlossen sind.

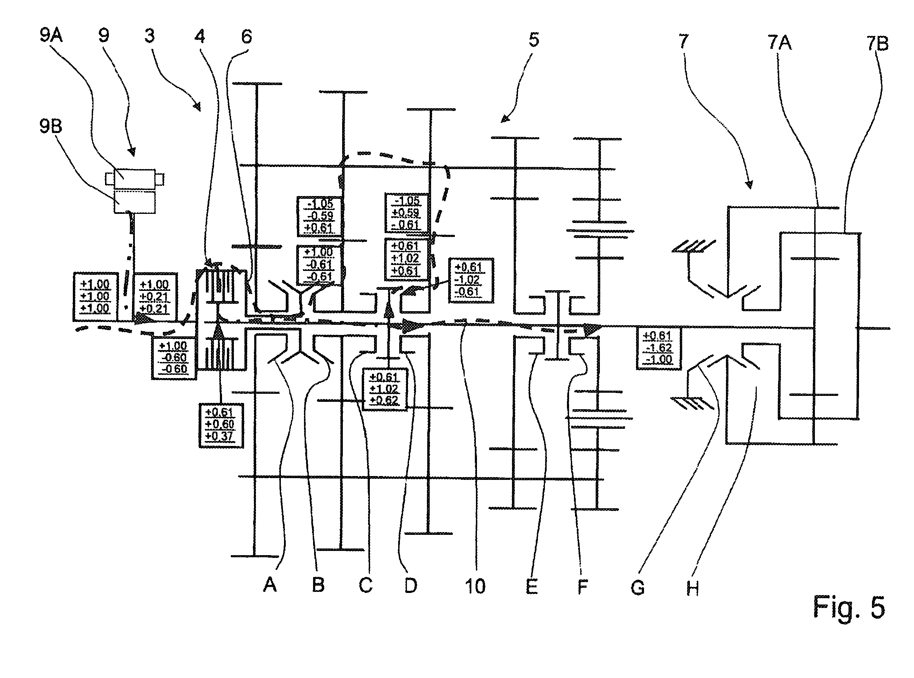

Bei Vorliegen einer Schaltanforderung für eine Hochschaltung ausgehend von der einen Istgang darstellenden zehnten Vorwärtsfahrstufe in Richtung der elften Vorwärtsfahrstufe, die den Zielgang darstellt, wird das Lastschaltelement 4 zunehmend geschlossen. Damit wird das über die Getriebeeingangswelle 6 in die erste Getriebegruppe 5 eingeleitete Drehmoment zunehmend von der Getriebeeingangswelle 6 über das Lastschaltelement 4 direkt auf die Getriebehauptwelle 10 geführt, wobei der über das Lastschaltelement 4 direkt auf die Getriebehauptwelle 10 geführte Anteil des Antriebsmomentes durch die strichpunktiert ausgeführte Linie in Fig. 5 graphisch dargestellt ist. Der durch Schließen des Lastschaltelementes 4 geschaltete Zwischengang der Getriebevorrichtung 3 entspricht vorliegend einer zwölften Vorwärtsfahrstufe mit der kleinsten Übersetzung der Getriebevorrichtung 3, so dass durch die Schaltung vom Istgang bzw. der zehnten Vorwärtsfahrstufe in den Zwischengang bzw. die zwölfte Vorwärtsfahrstufe ein Zugkrafteinbruch vorliegt.

Zur Kompensation des Zugkrafteinbruches wird über die motorisch betriebene elektrische Maschine 9, welche mit der Getriebeeingangswelle 6 wirkverbunden ist, in die über das Lastschaltelement 4 miteinander verbundenen Wellen 6 und 10 ein zu dem Antriebsmoment der Brennkraftmaschine 2 gleichgerichtetes Drehmoment eingeleitet. Dabei entspricht der von der elektrischen Maschine 9 erzeugte Drehmomentwert dem durch die Zuschaltung des Zwischenganges verursachten Zugkrafteinbruch, so dass dieser auf einfache Art und Weise ausgeglichen ist.

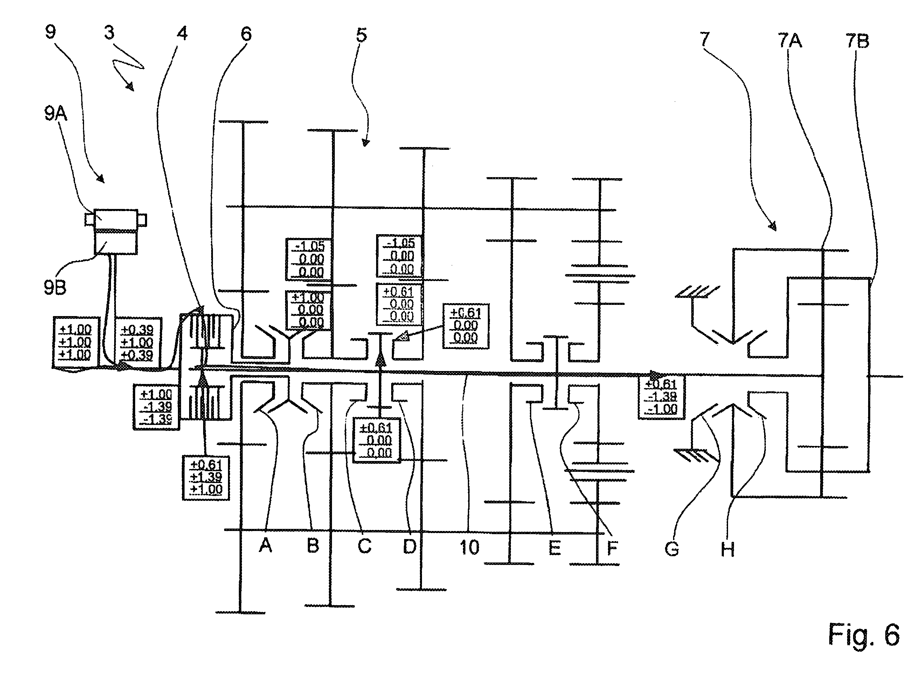

Die Schaltelemente C und D der ersten Getriebegruppe 5 sind in diesem Betriebszustand der Getriebevorrichtung 3 lastlos und werden geöffnet, wobei das über die Getriebeeingangswelle 6 anstehende Antriebsmoment in der in Fig. 6 dargestellten Art und Weise über das schlupfend betriebene Lastschaltelement 4 und die Getriebehauptwelle 10 in Richtung der zweiten Getriebegruppe 7 weitergeleitet wird. Anschließend wird die Übertragungsfähigkeit des Lastschaltelementes 4 erhöht, um die Antriebsdrehzahl der Brennkraftmaschine 2 in Richtung der Drehzahl des Zielganges bzw. der elften Vorwärtsfahrstufe zu führen bzw. zu reduzieren.

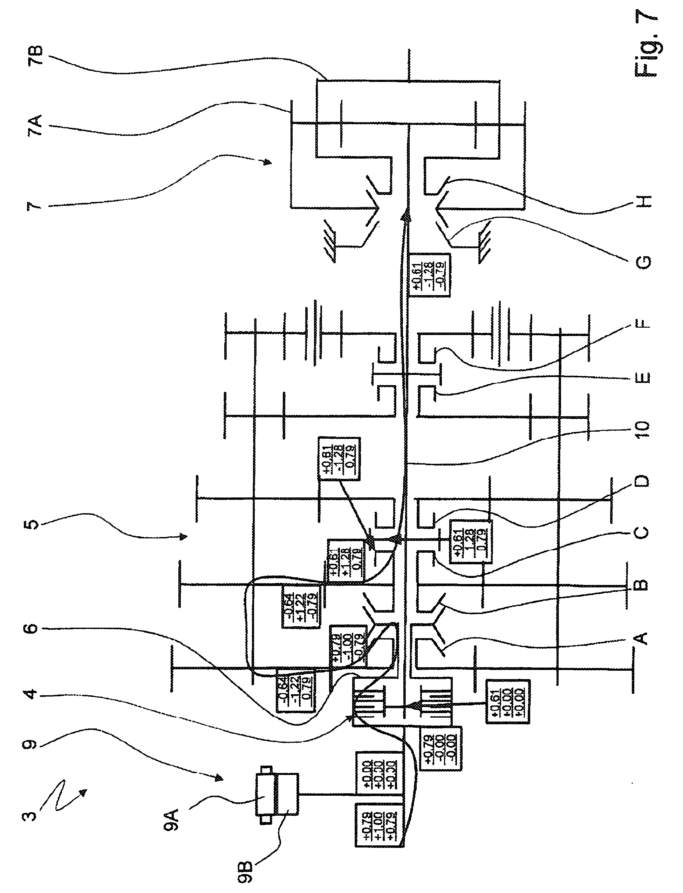

Wird erkannt, dass die Brennkraftmaschine 2 die Antriebsdrehzahl des Zielganges erreicht hat oder demnächst erreichen wird, werden die Schaltelemente A und C in der ersten Getriebegruppe 5 geschlossen und das Lastschaltelement 4 geöffnet sowie das Drehmoment der elektrischen Maschine 9 wieder auf Null reduziert, womit nur noch das Antriebsmoment der Brennkraftmaschine 2 in der in Fig. 7 dargestellten Art und Weise durch die Getriebevorrichtung 3 geführt wird. Zu diesem Zeitpunkt ist der angeforderte Gangwechsel zugkraftunterbrechungsfrei durchgeführt und vollständig abgeschlossen.

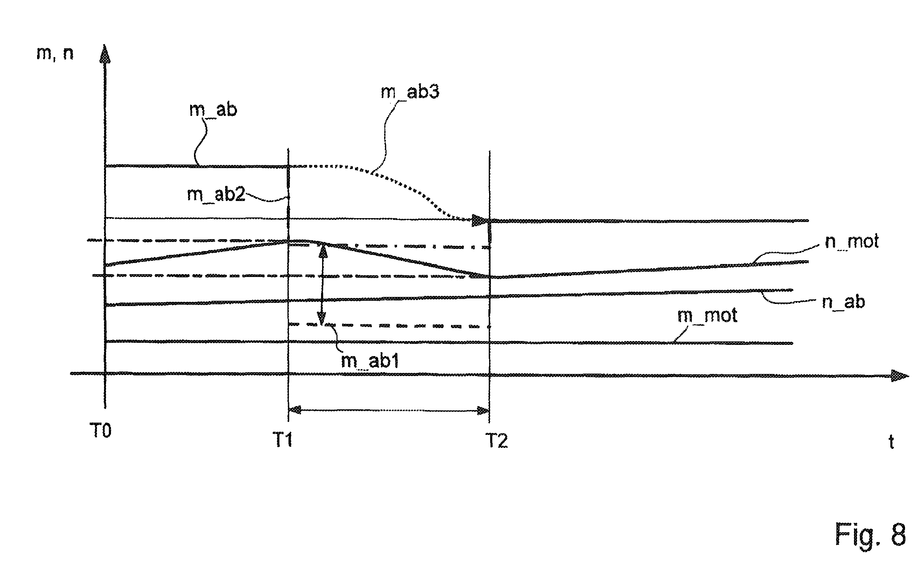

Fig. 8 zeigt eine qualitative Darstellung verschiedener Drehmoment- und Drehzahlverläufe während des vorbeschriebenen Schaltvorganges von der zehnten Vorwärtsfahrstufe in die elfte Vorwärtsfahrstufe mit der Zuschaltung der zwölften Vorwärtsfahrstufe als Zwischengang und der Zuschaltung der elektrischen Maschine 9.

Zu einen Zeitpunkt T0 ist in der Getriebevorrichtung 3 gemäß Fig. 4 bis Fig. 7 in vorbeschriebener Art und Weise die zehnte Vorwärtsfahrstufe als Istgang eingelegt. Da die elektrische Maschine 9 abgeschaltet ist, ergibt sich das Abtriebsmoment m_ab aus dem Produkt der Übersetzung $i_{10}$ der zehnten Vorwärtsfahrstufe und dem Antriebsmoment m_mot der Brennkraftmaschine, welches während des gesamten und der Darstellung gemäß Fig. 8 zugrundeliegenden Schaltvorganges konstant ist.

Zu einem Zeitpunkt T1 wird eine Schaltanforderung für eine Hochschaltung ausgehend von der zehnten Vorwärtsfahrstufe in die elfte Vorwärtsfahrstufe umgesetzt, wobei sich in Abhängigkeit der Ansteuerung der Getriebevorrichtung 3 zwischen dem Zeitpunkt T1 und einem Zeitpunkt T2, zu welchem der Schaltvorgang abgeschlossen ist, verschiedene Verläufe m_ab1, m_ab2 und m_ab3 des Abtriebsmomentes m_ab einstellen.

So stellt sich der Verlauf m_ab1 zwischen den Zeitpunkten T1 und T2 während einer automatisierten Schaltung ein, wobei sich das Abtriebsmoment m_ab aus dem Produkt des Antriebsmomentes m_mot der Brennkraftmaschine 2 und der Übersetzung $i_{12}$ des Zwischenganges bestimmt.

Der Verlauf m_ab2 des Abtriebsmomentes liegt oberhalb des Verlaufes m_ab1 und stellt sich durch Zuschaltung des Zwischenganges ohne elektromotorische Unterstützung ein. Dabei wird das Abtriebsmoment m_ab2 durch folgenden formelmäßigen Zusammenhang bestimmt:

$$m\_ab2 = (m\_mot + m\_dyn) * i_{12}$$

Dabei stellt der Summand m_dyn ein dynamisches Moment der Brennkraftmaschine 2 dar, welches gemäß folgendem formelmäßigen Zusammenhang bestimmt wird:

$$m\_dyn = (J\_mot + J\_pri) * \dot{\omega}\_mot$$

Der Grad k_zw der Zugkraftunterstützung mit Zwischengangschaltung berechnet sich wiederum gemäß folgendem formelmäßigen Zusammenhang:

$$k\_zw = ((m\_mot + m\_dyn) * i_{12}) / (m\_mot * i_{11})$$

Der Verlauf m_ab3 des Abtriebsmomentes stellt sich zwischen den Zeitpunkten T1 und T2 bei Durchführung einer Zwischengangschaltung und gleichzeitiger elektromotorischer Unterstützung ein, wobei das Abtriebsmoment m_ab3 in Abhängigkeit des Antriebsmomentes m_mot der Brennkraftmaschine 2, des dynamischen Momentes m_dyn der Brennkraftmaschine 2 und des Antriebsmomentes m_EM der elektrischen Maschine 9 wie folgt bestimmbar ist:

$$m\_ab3 = (m\_mot + m\_dyn + m\_EM) * i_{12}$$

Damit ist der Grad k_zw der Zugkraftunterstützung bei einem Schaltvorgang mit Zwischengangschaltung und elektromotorischer Unterstützung wie folgt bestimmbar:

$$k\_zw = ((m\_mot + m\_dyn + m\_EM) * i_{12}) / (m\_mot * i_{11})$$

Der Grad k_zw der Zugkraftunterstützung ist gleich Eins, wenn das Antriebsmoment m_EM der elektrischen Maschine 9 folgendem Term entspricht:

$$m\_EM = (m\_mot * i_{11}/i_{12} - 1) - m\_dyn$$

Bezug nehmend auf den in Fig. 8 graphisch dargestellten Vergleich der Zugkraftunterstützung sowie den vorstehend aufgeführten formelmäßigen Zusammenhängen ergibt sich, dass eine Schaltung mit Zwischengangschaltung und gleichzeitiger elektromotorischer Unterstützung im Wesentlichen zugkraftunterbrechungsfrei und mit hohem Schaltkomfort durchführbar ist, wobei die Drehzahl n_mot der Brennkraftmaschine 2 sowie die Abtriebsdrehzahl n_ab des Fahrzeuges 1 gemäß Fig. 1 jeweils den in Fig. 8 dargestellten Verlauf während der Hochschaltung von der zehnten in die elfte Vorwärtsfahrstufe bei Einlegen der zwölften Vorwärtsfahrstufe als Zwischengang und gleichzeitiger elektromotorischer Unterstützung sowie bei entsprechender Ansteuerung des Lastschaltelementes 4 aufweisen.

Bezugszeichen

| | |
|---|---|
| 1 | Fahrzeug |
| 2 | Brennkraftmaschine |
| 3 | Getriebevorrichtung |
| 4 | Lastschaltelement |
| 5 | erste Getriebegruppe |
| 6 | Getriebeeingangswelle |
| 7 | zweite Getriebegruppe |
| 7A | Hohlrad |
| 7B | Planetenträger |
| 8 | Anfahrelement |
| 9 | Elektrische Maschine |
| 9A | Stator |
| 9B | Rotor |
| 10 | Getriebehauptwelle |
| 11 | Planetenradsatz |
| 11A | Hohlrad |
| 11B | Planetenträger |
| 11C | Sonnenrad |
| 12 | weiteres Schaltelement |
| 13 | Motorausgangswelle |
| A - H | Schaltelement |
| m | Moment |
| m_ab | Abtriebsmoment |
| m_mot | Antriebsmoment der Brennkraftmaschine |
| n | Drehzahl |
| n_ab | Abtriebsdrehzahl |
| n_mot | Antriebsdrehzahl der Brennkraftmaschine |

**Patentansprüche**

1. Getriebevorrichtung (3) mit wenigstens zwei hintereinander angeordneten mehrgängigen Getriebegruppen (5, 7), wobei ein Drehmoment einer Getriebeeingangswelle (6) über diese in eine der Getriebegruppen (5) einleitbar ist und der anderen Getriebegruppe (7) über eine Getriebehauptwelle (10) zuführbar ist, und wobei die Getriebeeingangswelle (6) während eines Übersetzungswechsels von einem Istgang in einen Zielgang zur Darstellung eines Zwischenganges wenigstens zeitweise direkt mit der Getriebehauptwelle (10) über ein Lastschaltelement (4) verbindbar ist, wobei eine elektrische Maschine (9) vorgesehen ist, mittels welcher zumindest bei geschaltetem Zwischengang ein Drehmoment in die über das Lastschaltelement (4) miteinander verbundenen Wellen (6, 10) einleitbar ist, **dadurch gekennzeichnet, dass** die elektrische Maschine mit einer Welle (11 C) eines Planetenradsatzes (11) verbunden ist und die Getriebeeingangswelle (6) mit einer weiteren Welle (11B) des Planetenradsatzes (11) wirkverbunden ist.

2. Getriebevorrichtung nach Anspruch 1, **dadurch gekennzeichnet, dass** die elektrische Maschine (9) direkt an die Getriebeeingangswelle (6) angebunden ist.

3. Getriebevorrichtung nach Anspruch 1 oder 2, **dadurch gekennzeichnet, dass** die elektrische Maschine (9) mit dem Lastschaltelement (4) in Wirkverbindung steht.

4. Getriebevorrichtung nach einem der Ansprüche 1 bis 3, **dadurch gekennzeichnet, dass** die mit der Getriebeeingangswelle (6) in Verbindung stehende Getriebegruppe (5) als Vorgelegegetriebe ausgebildet ist.

5. Getriebevorrichtung nach Anspruch 4, **dadurch gekennzeichnet, dass** das Vorgelegegetriebe (5) als Ein- oder als Zwei-Vorgelegewellen-Getriebe ausgeführt ist.

6. Getriebevorrichtung nach einem der vorhergehenden Ansprüche, **dadurch gekennzeichnet, dass** die zweite Getriebegruppe (7) als Planetenradsatz ausgebildet ist, welcher über ein Schaltelement (H) verblockbar ist.

**Claims**

1. Transmission device (3) having at least two multi-gear transmission groups (5, 7) arranged one behind the other, it being possible for a torque of a transmission input shaft (6) to be introduced into one of the transmission groups (5) by said transmission input shaft and supplied to the other transmission group (7) via a transmission main shaft (10), and it being possible for the transmission input shaft (6) to be connected directly to the transmission main shaft (10) by means of a powershift element (4) in order to form an intermediate gear at least intermittently during a transmission ratio change from a present gear into a target gear, an electric machine (9) being provided by means of which, at least when the intermediate gear is engaged, a torque can be introduced into the shafts (6, 10) connected to one another by means of the powershift element (4), **characterized in that** the electric machine is connected to a shaft (11C) of a planetary gear set (11) and the transmission input shaft (6) is operatively connected to a further shaft (11B) of the planetary gear set (11).

2. Transmission device according to Claim 1, **characterized in that** the electric machine (9) is connected directly to the transmission input shaft (6).

3. Transmission device according to Claim 1 or 2, **characterized in that** the electric machine (9) is operatively connected to the powershift element (4).

4. Transmission device according to one of Claims 1 to 3, **characterized in that** the transmission group (5) connected to the transmission input shaft (6) is designed as a countershaft transmission.

5. Transmission device according to Claim 4, **characterized in that** the countershaft transmission (5) is designed as a single-countershaft or double-countershaft transmission.

6. Transmission device according to one of the preceding claims, **characterized in that** the second transmission group (7) is designed as a planetary gear set which can be blocked by means of a shift element (H).

**Revendications**

1. Dispositif de boîte de vitesses (3) comprenant au moins deux groupes de boîte de vitesses (5, 7) à plusieurs rapports disposés l'un derrière l'autre, un couple d'un arbre d'entrée de boîte de vitesses (6) pouvant être introduit par le biais de celui-ci dans l'un des groupes de boîte de vitesses (5), et pouvant être transmis à l'autre groupe de boîte de vitesses (7) par le biais d'un arbre principal de boîte de vitesses (10), et l'arbre d'entrée de boîte de vitesses (6) pouvant être raccordé directement à l'arbre principal de boîte de vitesses (10) au moins temporairement pendant un changement de rapport d'un rapport actuel dans un rapport cible pour constituer un rapport intermédiaire, un moteur électrique (9) étant prévu, au moyen duquel au moins lorsque le rapport intermédiaire est enclenché, un couple peut être introduit dans les arbres (6, 10) raccordés l'un à l'autre par le biais de l'élément de commutation de charge (4), **caractérisé en ce que** le moteur électrique est raccordé à un arbre (11C) d'un train planétaire (11) et l'arbre d'entrée de boîte de vitesses (6) est raccordé fonctionnellement à un autre arbre (11B) du train planétaire (11).

2. Dispositif de boîte de vitesses selon la revendication 1, **caractérisé en ce que** le moteur électrique (9) est raccordé directement à l'arbre d'entrée de boîte de vitesses (6).

3. Dispositif de boîte de vitesses selon la revendication 1 ou 2, **caractérisé en ce que** le moteur électrique (9) est raccordé fonctionnellement à l'élément de commutation de charge (4).

4. Dispositif de boîte de vitesses selon l'une quelconque des revendications 1 à 3, **caractérisé en ce que** le groupe de boîte de vitesses (5) raccordé à l'arbre d'entrée de boîte de vitesses (6) est réalisé sous forme de boîte de vitesses intermédiaire.

5. Dispositif de boîte de vitesses selon la revendication 4, **caractérisé en ce que** la boîte de vitesses intermédiaire (5) est réalisée sous forme de boîte de vitesses à un ou deux arbres intermédiaires.

6. Dispositif de boîte de vitesses selon l'une quelconque des revendications précédentes, **caractérisé en ce que** le deuxième groupe de boîte de vitesses (7) est réalisé sous forme de train planétaire qui peut être bloqué par le biais d'un élément de commutation (H).

1

2

3

Fig. 1

Fig. 2

Fig. 3

EP 2 122 196 B1

Fig. 4

EP 2 122 196 B1

Fig. 5

Fig. 6

EP 2 122 196 B1

14

Fig. 7

EP 2 122 196 B1

15

Fig. 8

EP 2 122 196 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006024370
- DE 19853825 C1